# EUROPÄISCHE PATENTSCHRIFT

(11) **EP 3 453 922 B1**
(45) Veröffentlichungstag und Bekanntmachung des Hinweises auf die Patenterteilung: **04.08.2021**
(21) Anmeldenummer: 17189843.0
(22) Anmeldetag: 07.09.2017
(51) Int. Cl.: F16H 57/023, F16H 7/02

(54) **VERFAHREN ZUM EINBAU EINES ZUGMITTELTRIEBS IN EIN KRAFTFAHRZEUGGETRIEBE**
METHOD FOR INSTALLING A TRACTION DRIVE INTO A MOTOR VEHICLE TRANSMISSION
PROCÉDÉ DE MONTAGE D'UN MOYEN DE TRACTION DANS UNE TRANSMISSION DE VÉHICULE AUTOMOBILE

(43) Veröffentlichungstag der Anmeldung: 13.03.2019
(73) Patentinhaber: ZF Friedrichshafen AG, 88046 Friedrichshafen (DE)
(72) Erfinder: Holst, Sven, 88074 Meckenbeuren (DE)
(74) Vertreter: ZF Friedrichshafen AG

(56) Entgegenhaltungen:
- EP-A2- 1 577 584
- WO-A1-93/11375
- WO-A1-2005/123434
- US-A- 2 925 740
- US-A1- 2009 113 865

## Beschreibung

Die Erfindung betrifft ein Verfahren zum Einbau eines Zugmitteltriebs in ein Kraftfahrzeuggetriebe.

Aus dem Stand der Technik WO 2005/123434 A1 ist der Einsatz eines Zugmitteltriebs, wie beispielsweise eines Kettentriebs, in Kraftfahrzeuggetrieben bekannt. Bei Kraftfahrzeuggetrieben, bei denen wenig Bauraum zur Verfügung steht, ist der Einbau des Zugmitteltriebs in das Kraftfahrzeuggetriebe jedoch oftmals schwierig und zeitaufwendig. Insbesondere kann es umständlich sein, ein Zugmittelrad mit einem Zugmittel triebtechnisch zu verbinden.

Die Aufgabe der Erfindung besteht daher darin, ein Verfahren anzugeben, mittels dem der Einbau des Zugmitteltriebs in das Kraftfahrzeuggetriebe auf einfache Weise erfolgt.

Die Aufgabe wird durch ein Verfahren gelöst, bei dem ein Getriebebauteil, das mit einem ersten Zugmittelrad des Zugmitteltriebs drehfest verbunden ist, in einen Hohl-raum eines Getriebegehäuses eingebracht wird und ein Zugmittel des Zugmitteltriebs mit dem ersten Zugmittelrad triebtechnisch verbunden wird und ein zweites Zugmittelrad des Zugmitteltriebs entlang einer Richtung in eine erste Stellung bewegt wird, bei der das zweite Zugmittelrad und das Zugmittel in einer Ebene angeordnet sind und anschließend das zweite Zugmittelrad entlang einer anderen Richtung in eine zweite Stellung bewegt wird, bei der eine triebtechnische Verbindung zwischen dem Zugmittel und dem zweiten Zugmittelrad besteht.

Das erfindungsgemäße Verfahren weist den Vorteil auf, dass der Einbau des Zugmitteltriebs in dem Kraftfahrzeuggetriebe auf einfache und schnelle Weise erfolgen kann. Dies ergibt sich, weil der Kopplungsvorgang des zweiten Zugmittelrads mit dem Zugmittel in zwei Schritte aufgeteilt ist. So wird das zweite Zugmittelrad bei einem ersten Schritt in die erste Stellung bewegt, bei der das zweite Zugmittelrad mit dem Zugmittel triebtechnisch nicht verbunden ist und die vorzugsweise innerhalb eines durch das Zugmittel umschlossenen Bereichs liegt. Bei einem zweiten Schritt wird das zweite Zugmittelrad in die zweite Stellung bewegt, bei der das zweite Zugmittelrad mit dem Zugmittel triebtechnisch verbunden ist. Durch die Aufteilung des Kopplungsvorgangs in die zuvor genannten zwei Schritte vereinfacht sich die triebtechnische Verbindung des zweiten Zugmittelrads, weil das zweite Zugmittelrad zum triebtechnischen Verbinden mit dem Zugmittelrad, insbesondere in nur einer einzigen, Richtung bewegt werden muss.

Unter einem Zugmittel kann ein Kraftübertragungsmittel verstanden werden, welches in einer Linearrichtung auf Zug belastet werden kann, um eine Kraft von dem ersten Zugmittelrad auf das zweite Zugmittelrad zu übertragen. Beispielsweise kann ein Zugmittel eine Kette sein, die Kettenglieder mit Öffnungen aufweist, in welche einzelne Zähne der Zugmittelräder eingreifen.

Die Richtungsangaben "axial" und "radial" beziehen sich, sofern nichts Gegenteiliges angegeben ist, auf eine Mittelachse des Kraftfahrzeuggetriebes. Das Getriebegehäuse ist beim Betrieb des Kraftfahrzeuggetriebes ortsfest angeordnet und/oder bewegt sich nicht.

Als drehfeste Verbindung wird eine Verbindung zwischen zwei Bauteilen verstanden, die derart ausgebildet und angeordnet ist, dass die beiden, miteinander wirkverbundenen Bauteile stets die gleiche Drehzahl aufweisen. Dies ist nicht der Fall, wenn beispielsweise zwischen den beiden miteinander verbundenen Bauteilen ein Schaltelement angeordnet ist, das sich im geöffneten Zustand befindet. Die drehfeste Verbindung kann beispielsweise durch eine Steckverzahnung realisiert werden. Alternativ kann die drehfeste Verbindung durch eine Schweißverbindung realisiert werden.

Bei einer besonderen Ausführung kann das Getriebebauteil in den Hohlraum des Getriebegehäuses eingebracht werden, indem das Getriebebauteil entlang einer axialen Richtung bewegt wird. Alternativ oder zusätzlich kann das Getriebegehäuse zum Anordnen des Getriebebauteils in dem Hohlraum entlang der axialen Richtung bewegt werden. Insbesondere kann das Getriebegehäuse über einen Teil des Getriebebauteils geschoben werden. Im Ergebnis kann das Getriebebauteil auf einfache Weise in den Hohlraum des Getriebegehäuses eingebracht werden.

Das zweite Zugmittelrad kann zum Überführen in die erste Stellung axial bewegt werden. In der ersten Stellung kann ein Koppelabschnitt des zweiten Zugmittelrads, der zum Koppeln des zweiten Zugmittelrads mit dem Zugmittel dient, in derselben Ebene angeordnet sein wie das Zugmittel. Die Ebene kann zur Mittelachse des Kraftfahrzeuggetriebes senkrecht stehen und/oder das erste Zugmittelrad aufweisen. Bei einer Ausbildung des Zugmittels als Kette kann der Koppelabschnitt eine Verzahnung aufweisen. Das zweite Zugmittelrad kann zum Überführen in die zweite Stellung entlang einer radialen Richtung bewegt werden.

Die Bewegung des Getriebebauteils in den Hohlraum kann entgegengesetzt gerichtet sein zu der Bewegung des zweiten Zugmittelrads in die erste Stellung. Darüber hinaus kann die Bewegung des Getriebegehäuses zum Anordnen des Getriebebauteils in dem Hohlraum gleichgerichtet sein zu der Bewegung des zweiten Zugmittelrads in die erste Stellung. Außerdem kann die Bewegung des zweiten Zugmittelrads aus der ersten Stellung in die zweite Stellung quer gerichtet sein zu der Bewegung des Getriebebauteils in den Hohlraum und/oder zu der Bewegung des Getriebegehäuses zum Anordnen des Getriebebauteils in dem Hohlraum. Insbesondere kann die Bewegungsrichtung des zweiten Zugmittelrads senkrecht zu der Bewegungsrichtung des Getriebebauteils und/oder des Getriebegehäuses stehen.

Das Getriebebauteil kann derart in den Hohlraum des Getriebegehäuses eingebracht werden, dass ein Getriebebauteilabschnitt das Getriebegehäuse kontaktiert. Dadurch wird erreicht, dass das erste Zugmittelrad axial besonders weit aus dem Getriebegehäuse hervorsteht, was die Verbindung des Zugmittels mit dem ersten Zugmittelrad auf einfache Weise ermöglicht. Im Anschluss an das Einbringen des Getriebebauteils in den Hohlraum des Getriebegehäuses kann das Zugmittel mit dem ersten Zugmittelrad triebtechnisch verbunden werden. Insbesondere kann das Zugmittel, wie beispielsweise die Kette, auf das Getriebebauteil montiert werden.

Bei einer besonderen Ausführung kann das zweite Zugmittelrad beim Überführen in die erste Stellung auf einen Lagerzapfen wenigstens teilweise aufgeschoben werden. Der Lagerzapfen und das Getriebegehäuse können einstückig ausgeführt sein. AIternativ kann der Lagerzapfen mit dem Getriebegehäuse wieder lösbar verbunden sein. Dabei kann der Lagerzapfen von dem Getriebegehäuse in eine Richtung vorstehen, die von dem Hohlraum des Getriebegehäuses weg gerichtet ist.

Das zweite Zugmittelrad kann eine Aussparung aufweisen, deren Innendurchmesser größer ist als der Außendurchmesser des Lagerzapfens. Der Lagerzapfen dringt in die Aussparung ein, wenn das zweite Zugmittelrad auf den Lagerzapfen aufgeschoben wird. Das zweite Zugmittelrad kann beim Überführen in die zweite Stellung relativ zu dem Lagerzapfen bewegt werden. Insbesondere kann das zweite Zugmittelrad in eine Richtung bewegt werden, die quer, vorzugsweise senkrecht, zu dem Lagerzapfen steht. Darüber hinaus kann das zweite Zugmittelrad beim Überführen in die zweite Stellung entlang der Ebene bewegt werden.

Die triebtechnische Verbindung zwischen dem zweiten Zugmittelrad und dem Zugmittel kann mittels der Bewegung des zweiten Zugmittelrads in die zweite Stellung hergestellt werden. Bei einer Ausführung des Zugmittels als Kette bedeutet dies, dass bei einer Bewegung des zweiten Zugmittelrads in die zweite Stellung die Zähne des zweiten Zugmittelrads in die entsprechenden Öffnungen der Kette eindringen. Dadurch kann eine triebtechnische Verbindung zwischen dem Zugmittel und dem zweiten Zugmittelrad auf einfache Weise hergestellt werden.

Anschließend kann das zweite Zugmittelrad entlang der Richtung in eine Endstellung bewegt werden. Dabei kann das zweite Zugmittelrad bei der Bewegung aus der zweiten Stellung in die Endstellung analog zu der Bewegung in die erste Stellung axial bewegt werden. Bei der Endstellung kann sich das zweite Zugmittelrad entlang der anderen Richtung nicht quer und/oder relativ zu dem Lagerzapfen bewegen. Darüber hinaus kann sich das in der Endstellung angeordnete zweite Zugmittelrad nicht entlang der Ebene bewegen.

Das zweite Zugmittelrad kann eine andere Aussparung aufweisen, in die der Lagerzapfen beim Bewegen des zweiten Zugmittelrads in die Endstellung eindringt. Dabei kann die andere Aussparung formschlüssig zu einem Teil des Lagerzapfens ausgebildet sein, sodass eine Bewegung des zweiten Zugmittelrads relativ zum Lagerzapfen entlang der radialen Richtung nicht möglich ist.

Bei einer besonderen Ausführung kann beim Überführen des zweiten Zugmittelrads in die Endstellung das Getriebebauteil gemeinsam mit dem zweiten Zugmittelrad und/oder mit dem Zugmittel bewegt werden. Insbesondere können das Getriebebauteil und das zweite Zugmittelrad und/oder das Zugmittel gemeinsam bewegt werden, wenn das zweite Zugmittelrad von der zweiten Stellung in die Endstellung bewegt wird.

Alternativ oder zusätzlich kann das Getriebebauteil mit dem zweiten Zugmittelrad und/oder mit dem Zugmittel gleichmäßig bewegt werden. Somit können das Getriebebauteil und das zweite Zugmittelrad und/oder das Zugmittel mit der gleichen Geschwindigkeit bewegt werden. Die gemeinsame und/oder gleichmäßige Bewegung des Zugmittelrads und des Getriebebauteils bietet den Vorteil, dass mechanische Spannungen im Zugmittel und/oder ein Verklemmen des Zugmitteltriebs, insbesondere des zweiten Zugmittelrads auf dem Lagerzapfen, vermieden werden können.

Das Getriebebauteil kann in eine Getriebebauteilendstellung bewegt werden, bei der das Getriebebauteil nicht in Kontakt mit dem Getriebegehäuse ist. Die Bewegung des Getriebebauteils in die Getriebebauteilendstellung kann gemeinsam mit der Bewegung des zweiten Zugmittelrads in die Endstellung erfolgen. Das Getriebebauteil wird zum Überführen in die Getriebebauteilendstellung entlang einer Bewegungsrichtung bewegt, die entgegengesetzt gerichtet ist zu der Bewegungsrichtung des Getriebebauteils beim Einbringen des Getriebebauteils in das Getriebegehäuse.

Der Betrieb des Kraftfahrzeuggetriebes kann erfolgen, wenn der Zugmitteltrieb, insbesondere die Bestandteile des Zugmitteltriebs, in der Endstellung und das Getriebebauteil in der Getriebebauteilendstellung angeordnet sind.

Bei einer besonderen Ausführung kann das zweite Zugmittelrad mit einer Rotorwelle einer elektrischen Maschine drehfest verbunden sein. Die elektrische Maschine kann in einem Hohlraum eines anderen Getriebegehäuses angeordnet sein. Beim Zusammenbau des Kraftfahrzeuggetriebes kann das Getriebegehäuse mit dem anderen Getriebegehäuse drehfest verbunden sein. Alternativ zu der triebtechnischen Verbindung mit der elektrischen Maschine kann das zweite Zugmittelrad mit einem, insbesondere nicht elektrischen, Nebenantrieb triebtechnisch verbunden sein.

Die elektrische Maschine besteht zumindest aus einem Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Als Rotorwelle wird eine Welle bezeichnet, die mit dem Rotor der elektrischen Maschine drehfest verbunden ist. Dabei kann der Rotor auf der Rotorwelle angeordnet sein.

Das Getriebebauteil kann ein Kupplungsbestandteil einer Kupplung, insbesondere einer Doppelkupplung oder einer Dreifachkupplung, sein. Der Kupplungsbestandteil kann ein Lamellenträger und/oder ein Kupplungsgehäuse sein.

Das Kraftfahrzeuggetriebe kann in einem Kraftfahrzeug eingebaut sein. Dabei kann das Kraftfahrzeuggetriebe ein Automatgetriebe sein, mittels dem mehrere Gänge mit unterschiedlicher Übersetzung zwischen einer Getriebeeingangswelle und einer Getriebeausgangswelle realisierbar sind.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigen:
Fig. 1 einen Zugmitteltrieb, ein Getriebebauteil und ein Getriebegehäuse in einem zusammengebauten Zustand,
Fig. 2 eine perspektivische Darstellung eines Getriebebauteils,
Fig. 3 eine Seitenschnittansicht des Getriebebauteils und des Getriebegehäuses bei einem Zustand, bei dem das Getriebebauteil in einen Hohlraum des Getriebegehäuses eingebracht ist,
Fig. 4 eine Vorderansicht auf das Getriebegehäuse und ein erstes Zugmittelrad bei einem Zustand, bei dem ein Zugmittel mit dem ersten Zugmittelrad triebtechnisch verbunden ist,
Fig. 5 eine Seitenschnittansicht des Getriebebauteils, des Getriebegehäuses und eines zweiten Zugmittelrads bei einem Zustand, bei dem das zweite Zugmittelrad in einer ersten Stellung angeordnet ist,
Fig. 6 eine Vorderansicht auf das in Figur 5 gezeigte Getriebebauteil, das Getriebegehäuse und das zweite Zugmittelrad,
Fig. 7 eine Vorderansicht auf das Getriebebauteil, das Getriebegehäuse und das zweite Zugmittelrad, wobei das zweite Zugmittelrad in einer zweiten Stellung angeordnet ist,
Fig. 8 eine Seitenschnittansicht des in Figur 7 gezeigten Getriebebauteils, des Getriebegehäuses und des zweiten Zugmittelrads.

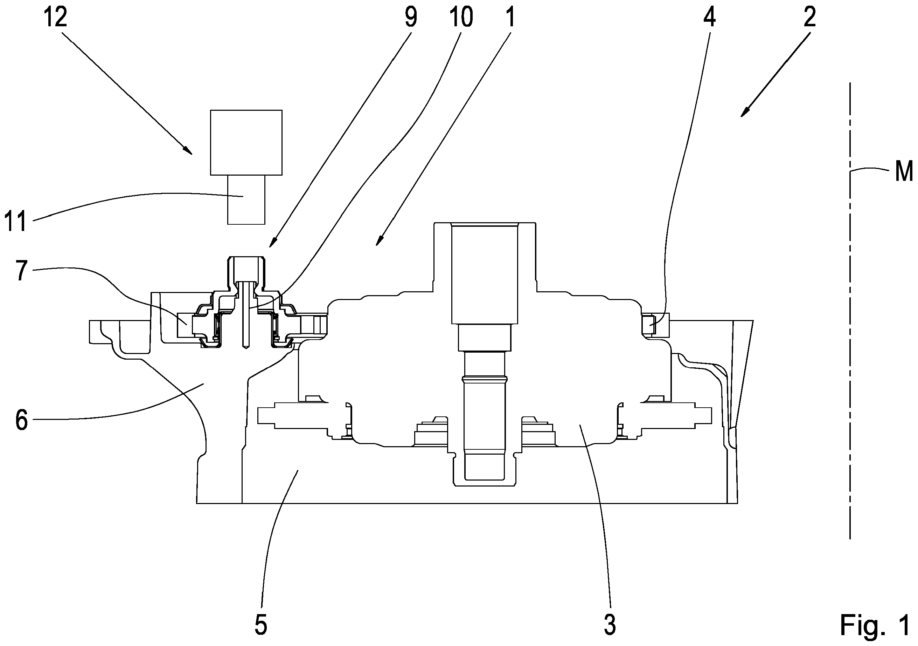

Figur 1 zeigt einen Zugmitteltrieb 1, ein Getriebegehäuse 6 eines Kraftfahrzeuggetriebes 2 und ein Getriebebauteil 3 des Kraftfahrzeuggetriebes 2 in einem zusammengebauten Zustand. Der Zugmitteltrieb 1 weist ein erstes Zugmittelrad 4 auf, das mit dem Getriebebauteil 3 drehfest verbunden ist. Darüber hinaus weist der Zugmitteltrieb 1 ein zweites Zugmittelrad 9 auf, das mittels eines Zugmittels 7 mit dem erstes Zugmittelrad 4 triebtechnisch verbunden ist. Das zweite Zugmittelrad 9 ist auf einen Lagerzapfen 10, der einstückig mit dem Getriebegehäuse 6 ausgeführt ist, aufgeschoben. Beim Betrieb des Kraftfahrzeuggetriebes 2 dient der Lagerzapfen 10 zum radialen Abstützen des zweiten Zugmittelrads 9 bezogen auf eine Mittelachse M des Kraftfahrzeuggetriebes 2. Der Zugmitteltrieb 1 kann als Kettentrieb ausgeführt sein.

Das Getriebebauteil 3 kann eine Kupplung aufweisen und ist in einer in Figur 1 dargestellten Getriebebauteilendstellung mit dem Getriebegehäuse 6 nicht in Kontakt. Das Getriebebauteil 3 ist derart in einen Hohlraum 5 des Getriebegehäuses 6 eingebracht, dass ein Teil des Getriebebauteils 3 innerhalb des Hohlraums 5 des Getriebegehäuses 6 angeordnet ist. Ein anderer Teil des Getriebebauteils 3, das das erste Zugmittelrad 4 aufweist, ist außerhalb des Hohlraums 5 angeordnet.

Figur 1 zeigt auch eine elektrische Maschine 12 mit einer Rotorwelle 11, In einem zusammengebauten, in den Figuren nicht dargestellten Zustand des Kraftfahrzeugbetriebes 2 ist die Rotorwelle 11 mit dem zweiten Zugmittelrad 9 drehfest verbunden. Die elektrische Maschine 12 kann in einem Hohlraum eines anderen Getriebegehäuses, das in den Figuren nicht dargestellt ist, angeordnet sein. Beim Zusammenbau des Kraftfahrzeuggetriebes 2 kann das Getriebegehäuse 6 mit dem anderen nicht dargestellten Getriebegehäuse fest verbunden werden.

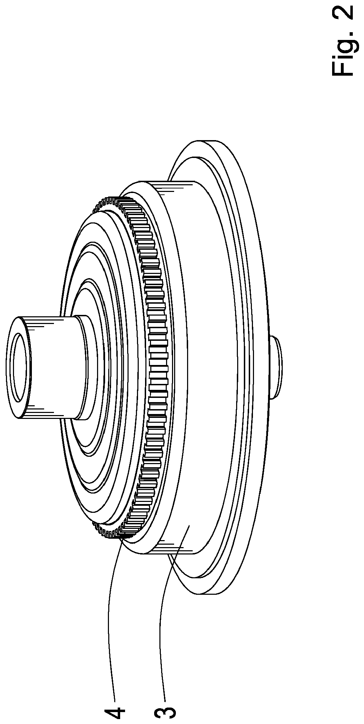

Figur 2 zeigt eine perspektivische Darstellung des Getriebebauteils 3 mit dem ersten Zugmittelrad 4. Wie aus Figur 2 ersichtlich ist, ist das erste Zugmittelrad 4 mit dem Getriebebauteil 3 drehfest verbunden. Das erste Zugmittelrad 4 weist entlang der Umfangsrichtung des ersten Zugmittelrads 4 eine Verzahnung mit einer Vielzahl von Zähnen auf.

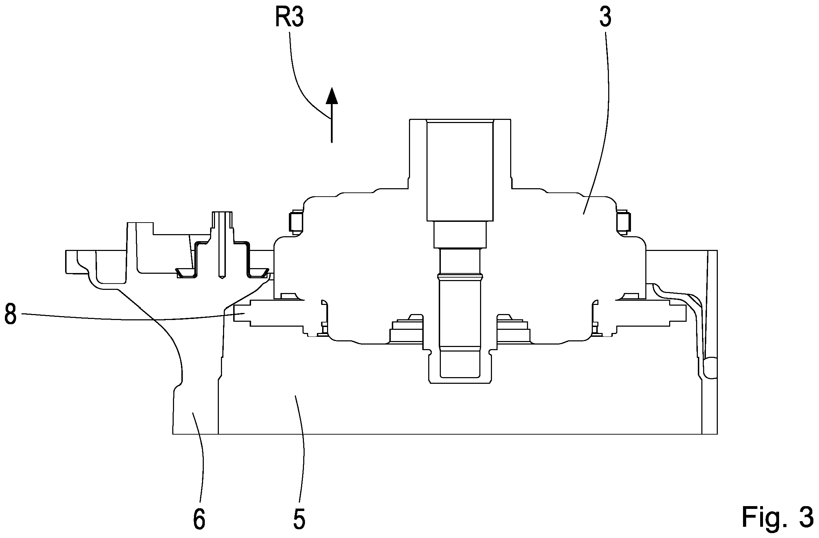

Im Folgenden wird mittels der Figuren 3 bis 8 der Einbau des Zugmitteltriebs 1 in das Kraftfahrzeuggetriebe 2 beschrieben.

Bei einem ersten Zusammenbauschritt wird, wie aus Figur 3 ersichtlich ist, das Getriebebauteil 3 in den Hohlraum 5 des Getriebegehäuses 6 eingebracht. Dabei wird das Getriebebauteil 3 entlang einer axialen Richtung R3 so weit verschoben, bis ein Getriebebauteilabschnitt 8 das Getriebegehäuse 6 kontaktiert. Somit ist die axiale Position des Getriebebauteils 3 relativ zum Getriebegehäuse 6 festgelegt.

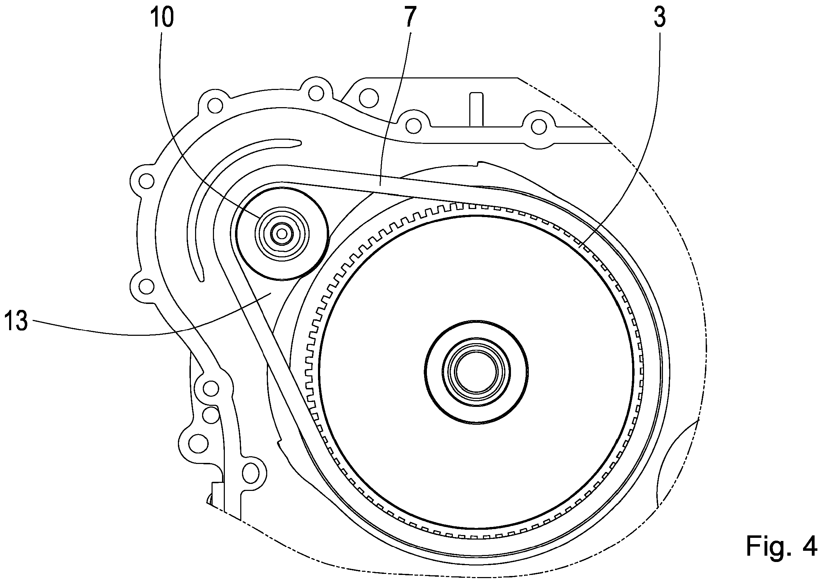

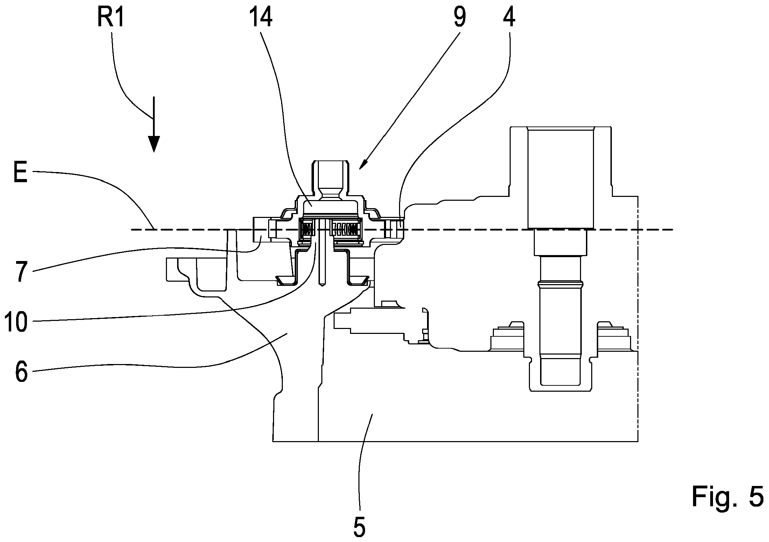

Bei einem anschließenden zweiten Zusammenbauschritt wird das erste Zugmittelrad 4 mit dem Zugmittel 7 triebtechnisch verbunden. Dies ist auf einfache Weise möglich, weil der mit dem ersten Zugmittelrad 4 verbundene Teil des Getriebebauteils 3 ausreichend weit von dem Getriebegehäuse 6 hervorsteht. Wie aus Figur 4 ersichtlich ist, wird durch das Zugmittel 7 ein Bereich 13 umschlossen, der den Lagerzapfen 10 aufweisen. Der Lagerzapfen 10 erstreckt sich, wie aus Figur 5 ersichtlich ist, von dem Getriebegehäuse 6 in eine Richtung weg von dem Hohlraum 5.

Bei einem dritten Zusammenbauschritt wird das zweite Zugmittelrad 9 in eine in Figur 5 gezeigte erste Stellung bewegt. Dazu wird das zweite Zugmittelrad 9 entlang einer Richtung R1, insbesondere axial, auf den Lagerzapfen 10 aufgeschoben. Dabei dringt der Lagerzapfen 10 in einen Hohlraum 14 des zweiten Zugmittelrads 9 ein. Der Hohlraum 14 weist einen Innendurchmesser auf, der größer ist als ein Außendurchmesser des Lagerzapfens 10. Das zweite Zugmittelrad 9 wird entlang der Richtung R1 soweit verschoben, bis das Zugmittel 7 und das zweite Zugmittelrad 9, insbesondere die Verzahnung des zweiten Zugmittelrads 9, in einer Ebene E angeordnet sind. Darüber hinaus ist das erste Zugmittelrad 4 ebenfalls in der Ebene E angeordnet.

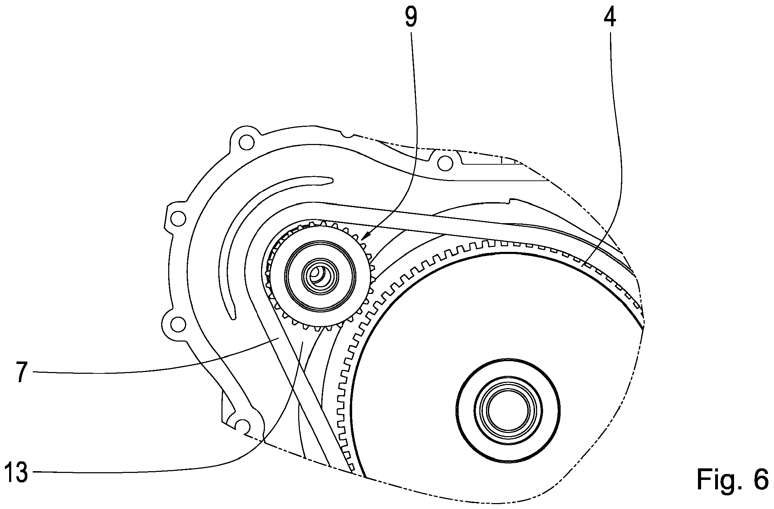

Wie aus Figur 6 ersichtlich ist, wird das zweite Zugmittelrad 9 in dem durch das Zugmittel 7 umschlossenen Bereich 13 derart angeordnet, dass das zweite Zugmittelrad 9 mit dem Zugmittel 7 triebtechnisch nicht verbunden ist. Insbesondere ist der radiale Abstand zwischen dem zweiten Zugmittelrad 9 und dem Zugmittel 7 so groß, dass die Zähne der Verzahnung des zweiten Zugmittelrads 9 nicht in Eingriff mit dem Zugmittel 7 sind.

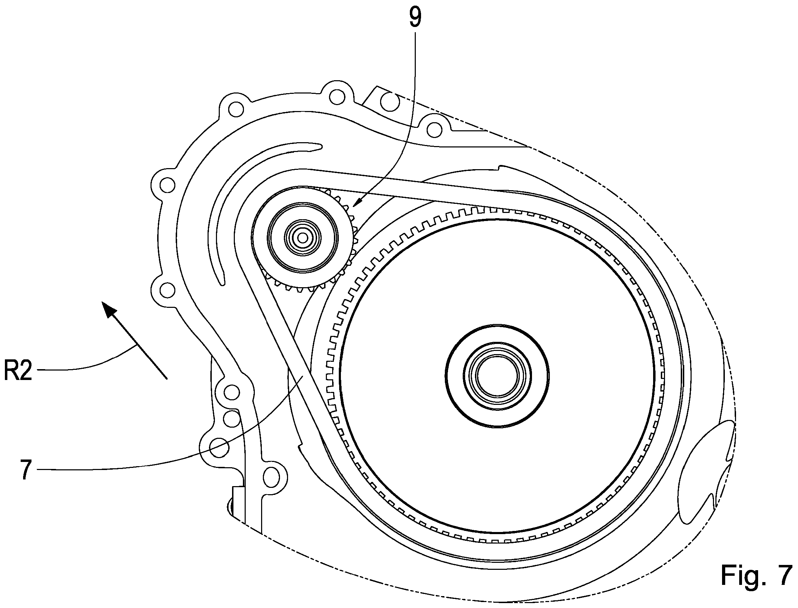

Bei einem anschließenden vierten Zusammenbauschritt wird das zweite Zugmittelrad 9 entlang einer anderen Richtung R2 in eine zweite Stellung bewegt. Insbesondere wird das zweite Zugmittelrad 9 entlang der radialen Richtung bewegt. Wie aus Figur 7 ersichtlich ist, ist das zweite Zugmittelrad 9 mit dem Zugmittel 7 triebtechnisch verbunden, wenn das zweite Zugmittelrad 9 in der zweiten Stellung angeordnet ist.

Beim Bewegen des zweiten Zugmittelrads 9 in die zweite Stellung bewegt sich das zweite Zugmittelrad 9, insbesondere in radialer Richtung, relativ zu dem Lagerzapfen 10. Dies ist möglich, weil der Innendurchmesser des Hohlraums 13 größer ist als der Außendurchmesser des Lagerzapfens 10.

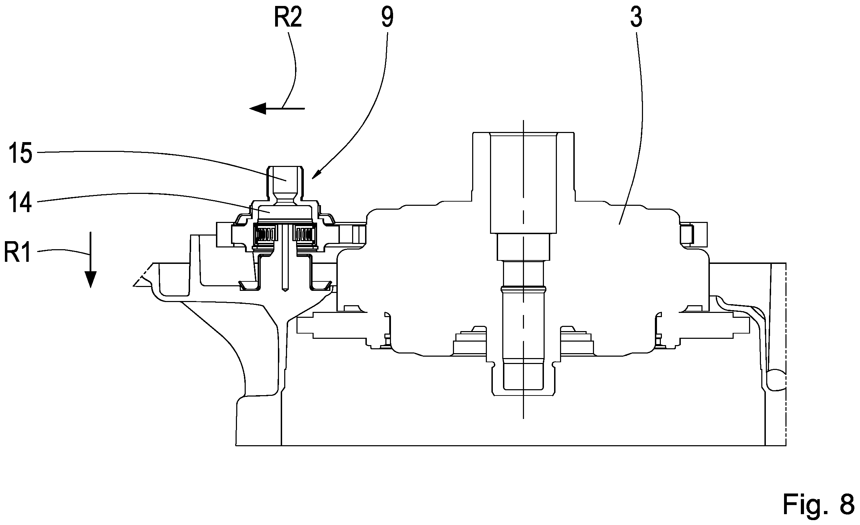

Wie aus Figur 8 ersichtlich ist, weist das zweite Zugmittelrad 9 einen anderen Hohlraum 15 auf, der mit dem Hohlraum 14 fluidisch verbunden ist. Ausgehend von der in Figur 8 dargestellten zweiten Stellung werden das zweite Zugmittelrad 9 und das Getriebebauteil 3 gemeinsam entlang der Richtung R1, insbesondere axial, in die in Figur 1 dargestellte Endstellung des zweiten Zugmittelrads 9 und die Getriebebauteilendstellung des Getriebebauteils 3 bewegt. Bei einem Bewegen des zweiten Zugmittelrads 9 in die Endstellung dringt der Lagerzapfen 10 in den anderen Hohlraum 15 ein. Dabei ist der andere Hohlraum 15 derart ausgebildet, dass eine Bewegung des zweiten Zugmittelrads 9 quer, insbesondere senkrecht, zu dem Lagerzapfen 10 nicht möglich ist.

Anschließend kann das zweite Zugmittelrad 9 mit der Rotorwelle 11 drehfest verbunden werden. Außerdem kann das Getriebegehäuse 6 mit dem anderen nicht dargestellten Getriebegehäuse fest verbunden werden.

### Bezugszeichen

- 1: Zugmitteltrieb
- 2: Kraftfahrzeuggetriebe
- 3: Getriebebauteil
- 4: erstes Zugmittelrad
- 5: Hohlraum
- 6: Getriebegehäuse
- 7: Zugmittel
- 8: Getriebebauteilabschnitt
- 9: zweites Zugmittelrad
- 10: Lagerzapfen
- 11: Rotorwelle
- 12: elektrische Maschine
- 13: Bereich
- 14: Hohlraum
- 15: anderer Hohlraum

- E: Ebene
- M: Mittelachse
- R1: Richtung
- R2: andere Richtung
- R3: axiale Richtung

## Patentansprüche

1. Verfahren zum Einbau eines Zugmitteltriebs (1) in ein Kraftfahrzeuggetriebe (2), wobei ein Getriebebauteil (3), das mit einem ersten Zugmittelrad (4) des Zugmitteltriebs (1) drehfest verbunden ist, in einen Hohlraum (5) eines Getriebegehäuses (6) eingebracht wird, **dadurch gekennzeichnet, dass** ein Zugmittel (7) des Zugmitteltriebs (1) mit dem ersten Zugmittelrad (4) triebtechnisch verbunden wird und ein zweites Zugmittelrad (9) des Zugmitteltriebs (1) entlang einer Richtung (R1) in eine erste Stellung bewegt wird, bei der das zweite Zugmittelrad (9) und das Zugmittel (7) in einer Ebene (E) angeordnet sind und anschließend das zweite Zugmittelrad (9) entlang einer anderen Richtung (R2) in eine zweite Stellung bewegt wird, bei der eine triebtechnische Verbindung zwischen dem Zugmittel (7) und dem zweiten Zugmittelrad (9) besteht.

2. Verfahren nach Anspruch 1, **dadurch gekennzeichnet, dass**
a. das Getriebebauteil (3) zum Einbringen in den Hohlraum (5) entlang einer axialen Richtung (R3) bewegt wird und/oder das Getriebegehäuse (6) zum Anordnen des Getriebebauteils (3) in dem Hohlraum (5) entlang einer axialen Richtung (R3) bewegt wird und/oder dass
b. das zweite Zugmittelrad (9) zum Überführen in die erste Stellung entlangaxial bewegt wird und/oder dass
c. das zweite Zugmittelrad (9) zum Überführen in die zweite Stellung entlang einer radialen Richtung bewegt wird.

3. Verfahren nach Anspruch 1 oder 2, **dadurch gekennzeichnet, dass**
a. die Bewegung des Getriebebauteils (3) in den Hohlraum (5) entgegengesetzt gerichtet ist zu der Bewegung des zweiten Zugmittelrads (9) in die erste Stellung und/oder dass
b. die Bewegung des Getriebegehäuses (6) zum Anordnen des Getriebebauteils (3) in dem Hohlraum (5) gleichgerichtet ist zu der Bewegung des zweiten Zugmittelrads (9) in die erste Stellung und/oder dass
c. die Bewegung des zweiten Zugmittelrads (9) aus der ersten Stellung in die zweite Stellung quer gerichtet ist zu der Bewegung des Getriebebauteils (3) in den Hohlraum (5) und/oder zu der Bewegung des Getriebegehäuses (6) zum Anordnen des Getriebebauteils (3) in dem Hohlraum (5).

4. Verfahren nach einem der Ansprüche 1 bis 3, **dadurch gekennzeichnet, dass** das Getriebebauteil (3) derart in den Hohlraum (5) des Getriebegehäuses (6) eingebracht wird, dass ein Getriebebauteilabschnitt (8) das Getriebegehäuse (6) kontaktiert.

5. Verfahren nach Anspruch 4, **dadurch gekennzeichnet, dass** das Zugmittel (7) mit dem ersten Zugmittelrad (4) triebtechnisch verbunden wird, nachdem das Getriebebauteil (3) in den Hohlraum (5) des Getriebegehäuses (6) eingebracht wurde.

6. Verfahren nach einem der Ansprüche 1 bis 5, **dadurch gekennzeichnet, dass** das zweite Zugmittelrad (9) beim Bewegen in die erste Stellung auf einen Lagerzapfen (10) aufgeschoben wird.

7. Verfahren nach Anspruch 6, **dadurch gekennzeichnet, dass** beim Bewegen des zweiten Zugmittelrads (9) in die zweite Stellung das zweite Zugmittelrad (9) relativ und/oder quer zu dem Lagerzapfen (10) und/oder entlang der Ebene (E) bewegt wird.

8. Verfahren nach einem der Ansprüche 1 bis 7, **dadurch gekennzeichnet, dass** die triebtechnische Verbindung zwischen dem zweiten Zugmittelrad (9) und dem Zugmittel (3) mittels der Bewegung des zweiten Zugmittelrads (9) in die zweite Stellung hergestellt wird.

9. Verfahren nach einem der Ansprüche 1 bis 8, **dadurch gekennzeichnet, dass** das zweite Zugmittelrad (9) entlang der Richtung (R1) in eine Endstellung bewegt wird, bei der eine Bewegung des zweiten Zugmittelrads (9) entlang der anderen Richtung (R2) relativ und/oder quer zum Lagerzapfen (10) nicht möglich ist.

10. Verfahren nach Anspruch 9, **dadurch gekennzeichnet, dass** beim Überführen des zweiten Zugmittelrads (9) in die Endstellung
a. das Getriebebauteil (3) gemeinsam mit dem zweiten Zugmittelrad (9) bewegt wird und/oder
b. das Getriebebauteil (3) mit dem zweiten Zugmittelrad (9) gleichmäßig bewegt wird und/oder
c. das Getriebebauteil (3) in eine Getriebebauteilendstellung bewegt wird, bei der das Getriebebauteil (3) nicht in Kontakt mit dem Getriebegehäuse (6) ist.

11. Verfahren nach einem der Ansprüche 1 bis 10, **dadurch gekennzeichnet, dass** das zweite Zugmittelrad (9) mit einer Rotorwelle (11) einer elektrischen Maschine (12) drehfest verbunden wird.

12. Verfahren nach einem der Ansprüche 1 bis 11, **dadurch gekennzeichnet, dass** das Getriebebauteil (3) ein Kupplungsbestandteil ist.

## Claims

1. Method for installing a traction mechanism (1) in a motor vehicle transmission (2), wherein a transmission component (3) which is connected to a first traction mechanism wheel (4) of the traction mechanism drive (1) for conjoint rotation is introduced into a cavity (5) of a transmission housing (6), **characterized in that** one traction mechanism (7) of the traction mechanism drive (1) is connected in terms of drive to the first traction mechanism wheel (4) and a second traction mechanism wheel (9) of the traction mechanism drive (1) is moved along a direction (R1) into a first position in which the second traction mechanism wheel (9) and the traction mechanism (7) are arranged in a plane (E) and then the second traction mechanism wheel (9) is moved along another direction (R2) into a second position in which there is a connection in terms of drive between the traction mechanism (7) and the second traction mechanism wheel (9).

2. Method according to Claim 1, **characterized in that**
a. the transmission component (3) is moved along an axial direction (R3) for introduction into the cavity (5), and/or the transmission housing (6) is moved along an axial direction (R3) for arranging the transmission component (3) in the cavity (5), and/or **in that**
b. the second traction mechanism wheel (9) is moved along axially for transferring into the first position, and/or **in that**
c. the second traction mechanism wheel (9) is moved along a radial direction for transferring into the second position.

3. Method according to Claim 1 or 2, **characterized in that**
a. the movement of the transmission component (3) into the cavity (5) is directed counter to the movement of the second traction mechanism wheel (9) into the first position, and/or **in that**
b. the movement of the transmission housing (6) for arranging the transmission component (3) in the cavity (5) is directed in the same direction as the movement of the second traction mechanism wheel (9) into the first position, and/or **in that**
c. the movement of the second traction mechanism wheel (9) out of the first position into the second position is directed transversely with respect to the movement of the transmission component (3) into the cavity (5) and/or with respect to the movement of the transmission housing (6) for arranging the transmission component (3) in the cavity (5).

4. Method according to one of Claims 1 to 3, **characterized in that** the transmission component (3) is introduced into the cavity (5) of the transmission housing (6) in such a manner that a transmission component section (8) makes contact with the transmission housing (6).

5. Method according to Claim 4, **characterized in that** the traction mechanism (7) is connected in terms of drive to the first traction mechanism wheel (4) after the transmission component (3) has been introduced in to the cavity (5) of the transmission housing (6).

6. Method according to one of Claims 1 to 5, **characterized in that** the second traction mechanism wheel (9) is pushed onto a bearing journal (10) during the movement into the first position.

7. Method according to Claim 6, **characterized in that**, during the movement of the second traction mechanism wheel (9) into the second position, the second traction mechanism wheel (9) is moved relative to and/or transversely with respect to bearing journal (10) and/or along the plane (E).

8. Method according to one of Claims 1 to 7, **characterized in that** the connection in terms of drive between the second traction mechanism wheel (9) and the traction mechanism (3) is produced by means of the movement of the second traction mechanism wheel (9) into the second position.

9. Method according to one of Claims 1 to 8, **characterized in that** the second traction mechanism wheel (9) is moved along a direction (R1) into an end position in which a movement of the second traction mechanism wheel (9) along the other direction (R2) relative to and/or transversely with respect to the bearing journal (10) is not possible.

10. Method according to Claim 9, **characterized in that**, during the transfer of the second traction mechanism wheel (9) into the end position
a. the transmission component (3) is moved together with the second traction mechanism wheel (9), and/or
b. the transmission component (3) is moved uniformly with the second traction mechanism wheel (9), and/or
c. the transmission component (3) is moved into a transmission component end position in which the transmission component (3) is not in contact with the transmission housing (6).

11. Method according to one of Claims 1 to 10, **characterized in that** the second traction mechanism wheel (9) is connected to a rotor shaft (11) of an electric machine (12) for conjoint rotation.

12. Method according to one of Claims 1 to 11, **characterized in that** the transmission component (3) is a clutch constituent part.

## Revendications

1. Procédé de montage d'un entraînement à moyen de traction (1) dans une transmission de véhicule automobile (2), un composant de transmission (3), qui est relié de manière immobile en rotation avec une première roue de moyen de traction (4) de l'entraînement à moyen de traction (1), étant introduit dans une cavité (5) d'un carter de transmission (6), **caractérisé en ce qu'**un moyen de traction (7) de l'entraînement à moyen de traction (1) est relié pour l'entraînement avec la première roue de moyen de traction (4) et une deuxième roue de moyen de traction (9) de l'entraînement à moyen de traction (1) est déplacée le long d'une direction (R1) dans une première position, à laquelle la deuxième roue de moyen de traction (9) et le moyen de traction (7) sont agencés dans un plan (E), puis la deuxième roue de moyen de traction (9) est déplacée le long d'une autre direction (R2) dans une deuxième position, à laquelle une liaison pour l'entraînement existe entre le moyen de traction (7) et la deuxième roue de moyen de traction (9).

2. Procédé selon la revendication 1, **caractérisé en ce que**
a. le composant de transmission (3) est déplacé le long d'une direction axiale (R3) pour l'introduction dans la cavité (5) et/ou le carter de transmission (6) est déplacé le long d'une direction axiale (R3) pour l'agencement du composant de transmission (3) dans la cavité (5), et/ou **en ce que**
b. la deuxième roue de moyen de traction (9) est déplacée axialement pour le transfert dans la première position, et/ou **en ce que**
c. la deuxième roue de moyen de traction (9) est déplacée le long d'une direction radiale pour le transfert dans la deuxième position.

3. Procédé selon la revendication 1 ou 2, **caractérisé en ce que**
a. le déplacement du composant de transmission (3) dans la cavité (5) est orienté en sens opposé au déplacement de la deuxième roue de moyen de traction (9) dans la première position, et/ou **en ce que**
b. le déplacement du carter de transmission (6) pour l'agencement du composant de transmission (3) dans la cavité (5) est orienté dans le même sens que le déplacement de la deuxième roue de moyen de traction (9) dans la première position, et/ou **en ce que**
c. le déplacement de la deuxième roue de moyen de traction (9) de la première position dans la deuxième position est orienté transversalement au déplacement du composant de transmission (3) dans la cavité (5) et/ou au déplacement du boîtier de transmission (6) pour l'agencement du composant de transmission (3) dans la cavité (5).

4. Procédé selon l'une quelconque des revendications 1 à 3, **caractérisé en ce que** le composant de transmission (3) est introduit dans la cavité (5) du carter de transmission (6) de telle sorte qu'une section de composant de transmission (8) vienne en contact avec le carter de transmission (6).

5. Procédé selon la revendication 4, **caractérisé en ce que** le moyen de traction (7) est relié pour l'entraînement avec la première roue de moyen de traction (4), après que le composant de transmission (3) a été introduit dans la cavité (5) du carter de transmission (6).

6. Procédé selon l'une quelconque des revendications 1 à 5, **caractérisé en ce que** la deuxième roue de moyen de traction (9) est enfilée sur un pivot (10) lors du déplacement dans la première position.

7. Procédé selon la revendication 6, **caractérisé en ce que**, lors du déplacement de la deuxième roue de moyen de traction (9) dans la deuxième position, la deuxième roue de moyen de traction (9) est déplacée relativement et/ou transversalement au pivot (10) et/ou le long du plan (E).

8. Procédé selon l'une quelconque des revendications 1 à 7, **caractérisé en ce que** la liaison pour l'entraînement entre la deuxième roue de moyen de traction (9) et le moyen de traction (3) est produite au moyen du déplacement de la deuxième roue de moyen de traction (9) dans la deuxième position.

9. Procédé selon l'une quelconque des revendications 1 à 8, **caractérisé en ce que** la deuxième roue de moyen de traction (9) est déplacée le long de la direction (R1) dans une position finale, à laquelle un déplacement de la deuxième roue de moyen de traction (9) le long de l'autre direction (R2) relativement et/ou transversalement au pivot (10) n'est pas possible.

10. Procédé selon la revendication 9, **caractérisé en ce que** lors du transfert de la deuxième roue de moyen de traction (9) dans la position finale,
a. le composant de transmission (3) est déplacé conjointement avec la deuxième roue de moyen de traction (9), et/ou
b. le composant de transmission (3) est déplacé uniformément avec la deuxième roue de moyen de traction (9), et/ou
c. le composant de transmission (3) est déplacé dans une position finale de composant de transmission, à laquelle le composant de transmission (3) n'est pas en contact avec le carter de transmission (6).

11. Procédé selon l'une quelconque des revendications 1 à 10, **caractérisé en ce que** la deuxième roue de moyen de traction (9) est reliée de manière immobile en rotation avec un arbre de rotor (11) d'un moteur électrique (12).

12. Procédé selon l'une quelconque des revendications 1 à 11, **caractérisé en ce que** le composant de transmission (3) est un constituant d'embrayage.
